# EUROPEAN PATENT APPLICATION

(11) **EP 1 772 802 A2**
(43) Date of publication of application: **11.04.2007**
(21) Application number: 06254430.9
(22) Date of filing: 24.08.2006
(51) Int. Cl.: G06F 3/14, H04M 3/42

(54) **Remote control of a mobile telephone**

(30) Priority: 07.10.2005 US 246845
(71) Applicant: Agere Systems, Inc., Allentown, PA 18109 (US)
(72) Inventor: Landschaft, Assaf, 80801 München (DE); Wohlstadter, Gal, Givataim 53366 (IL); Wohlstadter, Gil, Givataim 53366 (IL)
(74) Representative: Williams, David John

(57) **Abstract**

Introduced is a method for providing call center support to a mobile communications device. In one embodiment the method includes (1) establishing voice and data connectivity between a mobile communications device having a visual display and a call center communications device having a visual display; and (2) causing an entirety of an image appearing on the visual display of the mobile communications device to be replicated on the visual display of the call center communications device.

## Description

### TECHNICAL FIELD OF THE INVENTION

The present invention is directed, in general, to mobile communications devices and, more specifically, to a device and method to enhance call center support for mobile communications devices.

### BACKGROUND OF THE INVENTION

Mobile communication devices are increasingly used for purposes other than speech communication. A variety of applications, such as messaging services, data communication, e-mail or fax services are available to users of mobile communication devices. Currently, for example, mobile communications devices are typically equipped with cameras that allow a user to take a digital photograph which can then transmit it another person with a similarly equipped device.

The development of third generation (3G) communications networks with their associated mobile communication devices has increased and provided even more functionality to the various types of mobile communications devices. The complexity of modern mobile communications devices and their increased functionality, combined with the ever shrinking keyboards on such devices, makes it difficult for many users to maximize the capability of such devices. Thus, there is an ever increasing demand for support services for such devices. In most cases this type of support is provided by a call center.

Call center support is generally provided by way of a verbal dialogue between the user of the mobile communications device and a call center representative. However, such support is generally limited to verbal communications between the parties. That is, in a typical support call, the support person instructs the user to perform certain operations with his or her mobile communications device and relies on the user to follow his or her instructions. Frequently it is difficult for the support center person to help the user, because the user either does not exactly understand the instructions or because the user's mobile communications device is configured differently from what the support center person assumes to be the case.

Accordingly, what is needed in the art are new and improved methods to provide call center support to users of mobile communications devices as well as a devices to implement such methods.

### SUMMARY OF THE INVENTION

To address the above-discussed deficiencies of the prior art, the present invention provides a method for providing call center support to a mobile communications device. In one embodiment the method includes (1) establishing voice and data connectivity between a mobile communications device having a visual display and a call center communications device having a visual display; and (2) causing an entirety of an image appearing on the visual display of the mobile communications device to be replicated on the visual display of the call center communications device.

Thus, the present invention permits a person in a call center to more efficiently render assistance to a user of a mobile communications device. The person rendering assistance can now see exactly the same thing as the user of the mobile communications device sees, regardless of how the visual display on the mobile communications device is configured. This beneficial embodiment overcomes communications problems that arise when a user of a mobile communications device does not exactly understand instructions or has his or her visual display configured differently from that of the call center person rendering assistance.

In one embodiment of the invention the image is a video stream. A particularly useful embodiment provides for the call center to take control of the mobile communications device. Another useful embodiment provides for any changes made to the image appearing on the visual display of the mobile communications device to be immediately replicated on the visual display of the call center communications device. This embodiment permits the call center person to monitor the mobile communications device as assistance is being given.

Another embodiment provides for data connectivity between the call center and the mobile communications device to be established by the user of the mobile communications device. This gives flexibility to the user to decide, after establishing a voice connection with the call center, whether or not he or she wants to take advantage of this particular capability of the call center and allow call center personnel to view the visual display as it appears on the mobile communications device.

In yet another embodiment, the image is provided as a bitmap. In still yet another embodiment, voice and data connectivity is established via a third generation wireless communication network in accordance with UMTS standards. The method described herein can be used with any mobile communications device, but particularly those selected from the group consisting of a mobile phone, a PDA, an MDA, a pocket PC, or a tablet PC.

The present invention also provides for a device that, in one embodiment, is a mobile communications device that includes (1) an input for establishing voice and data connectivity with a call center communications device; and (2) a connectivity module for replicating the entirety of an image appearing on a visual display on the mobile communications device on the visual display of the call center communications device.

The foregoing has outlined preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention.

### BRIEF DESCRIPTION OF THE DRAWINGS

For a more complete understanding of the invention, reference is now made to the following descriptions taken in conjunction with the accompanying drawing, in which:
FIGURE 1 illustrates a schematic of an embodiment of the present invention showing a mobile communications device connected to a call center; and
FIGURE 2 illustrates a flow chart of communications between a mobile communications device and a call center communications device that are conducted in accordance with the present invention.

### DETAILED DESCRIPTION

Before describing the FIGURES, various aspects, embodiments and features of the invention will be described. The invention presents a method of communication between a mobile communications device and a supporting call center. The inventive method provides for the establishment of a voice and data connection between a mobile communication device and a call center communications device. Each of the two devices have a visual display to permit the entirety of an image appearing on the mobile communications device's visual display to be replicated on the call center communications device's visual display via the voice and data connection. The term "entirety of an image", as used herein, means the border-to-border and top-to-bottom image as it appears on a visual display. After connectivity is established, the image on the visual display of the call center device will be an exact copy of the image and its contents as it appears on the mobile communications device's display. This enables a call center person rendering assistance to the user of a mobile communications device to see exactly what such user sees and, accordingly, assists and helps him or her to provide correct and more efficient support.

In one embodiment the digital image transmitted will be a bitmap having the same resolution and color depth as that on the corresponding mobile communication device's visual display. Of course, depending on the amount of data to be transmitted, suitable compression methods can be utilized to reduce the data load.

A particularly advantageous embodiment of the invention provides for the image transmitted to the call center communications device to be updated and kept current whenever the visual display content of the mobile communication devices is changed. In fact, one embodiment provides for the image on the mobile communications device to be a video stream. Preferably, video streaming of the visual display content is started after the mobile communications device user gives the appropriate command. This command can be given in a number of different ways, ranging from the user pressing a specified key on the keypad to a verbal command. Of course any other type or command sequence that may be designated by a user.

A particularly useful embodiment of the invention permits the call center to control and give direct commands to the mobile communications device. This feature can be used, for example, when a mobile communications device user does not want to take the time to troubleshoot or resolve a problem or the implementation instructions are particularly complicated. For instance, if a user is having difficulty installing a new software program on his or her cell phone, PDA or other mobile communications device, a knowledgeable person at a call center can directly input appropriate instructions to effectuate the installation. Because most users would only be interested in getting the program installed and does not particularly care how it gets installed, time is saved for both the user and call center person rendering assistance.

The invention described herein also provides for special embodiments to take advantage of the video streaming capabilities of third generation (3G) wireless communication technologies and the associated devices. In one embodiment, connection between the mobile communications device and the support center communications device is established using a 3G wireless communication network according to UMTS standards. Of course, any other suitable presently known or subsequently developed standard, such as CDMA2000 or FOMA, can also be used with the present invention.

Although the invention described herein is particularly useful when video streaming capabilities of 3G mobile communication devices and networks are used, the invention is not so limited, inasmuch as the transmission of digital image data is also possible utilizing 2.5G technologies, such as GSM/GPRS.

The present invention can be used with any mobile communications device. One embodiment provides for the mobile communication device to be selected from a group that includes a mobile phone, a PDA, an MDA, a Pocket PC or a Tablet PC. A particularly advantageous feature of the present invention is that it can be adapted to transmit an image digitally simultaneously with an ongoing voice communication.

Because for most users the present invention will be useful only in certain situations, one embodiment provides for it to be user activated. Thus, the user of the mobile communications device will be able to retain control of the device unless he or she wants to either share information with a call center or let a call center operate the device. Such activation can be performed by the user any time after a connection is established or it can be appropriately limited.

Because video streaming functionality of 3G technology can be employed in connection with the present invention, the mobile communication device is adapted for communicating via a 3G wireless communication network, in particular accordance with UMTS standards. As previously noted, any other 3G compliant network and/or 2.5G compliant networks can be used, if they have the appropriate functionality for the transmission of digital image data.

Inasmuch as the present invention, as described herein, can be implemented utilizing appropriate software, a digital storage medium lies within the scope of the present invention. Such digital storage medium will include the appropriate electronically readable control instructions adapted to execute the inventive method described herein. In one embodiment, the digital storage medium, will include electronically readable control instructions for controlling a mobile communications device adapted to execute a process of establishing a voice and data connection with a call center communications device and replicating the entirety of the image appearing on the mobile communications device's display on the call center communications device's display.

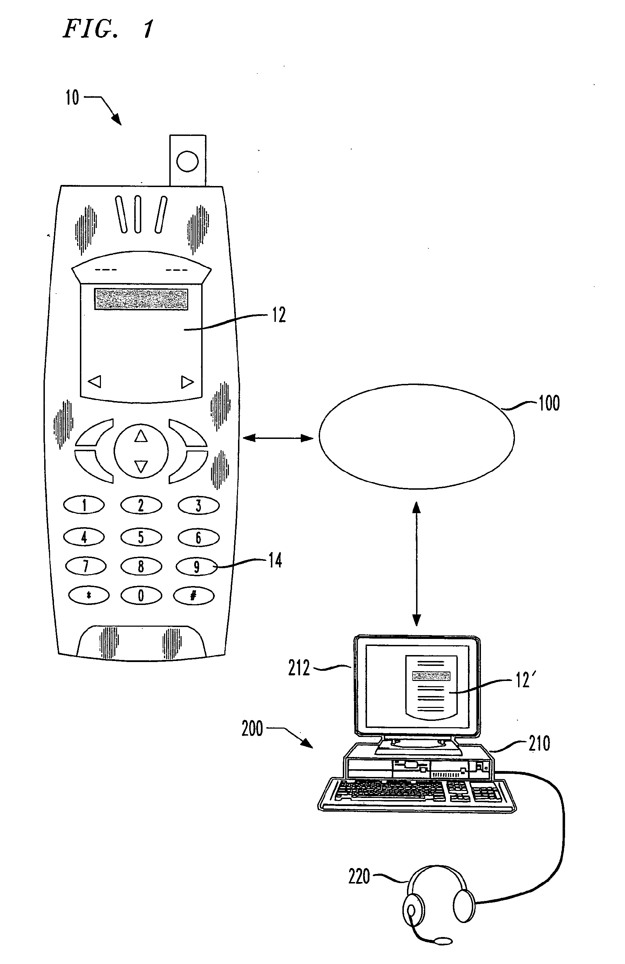

Referring initially to FIGURE 1, illustrated is a schematic of an embodiment of the present invention showing a mobile communications device 10 connected to a call center communications device 200. The illustrated mobile communications device 10 is, in this instance, a mobile phone. For purposes of this explanation, the mobile communications device 10 is adapted for use in a 3G wireless network 100, such as UMTS. The mobile communications device 10 is provided with a visual display showing an image 12 and a keypad 14 for user input. Voice and data connectivity between the mobile communications device 10 and a call center communications device 200 is established over a wireless network 100.

The mobile communications device 10 has a connectivity module that is responsive to user input. Therefore, when the user of the mobile communications device 10 calls the supporting call center, he or she has control over data connectivity with the call center. At the user's option, he or she can activate a control, which can be a button on the keypad 14 or a voice command, to cause the entirety of an image 12 appearing on the visual display of the mobile communications device 10 to be replicated as an image 12' on the visual display 212 for the call center communications device 200. In one embodiment of the invention the image 12 on the mobile communications device 10 is sent as a bitmap. Another embodiment provides for the mobile communications device 10 to send an image 12 every time the displayed image 12 changes. As a practical matter, the rate of transmission has the appearance of a video stream of the image's 12 bitmap. Of course in another embodiment, the invention provides for the image 12 to be an actual video stream.

At the call center the support person will see the identical image 12' on the visual display 212 as it appears on the display 12 of the mobile communications device 10. As was the case with the mobile communications device 10, the call center communications device can also be a 3G mobile phone, PDA, MDA, or, as shown in FIGURE 1, a computer 210 that is provided with a 3G mobile phone card to receive the image 12'. Thus, the image 12, as viewed by the user of the mobile communications device, will be dynamically shown on the display of the call center communications device 212. As a support person uses his or her headset 220 to talk to the person seeking support over a voice channel, he or she continues to have a real time view of an image 12' which is the same image 12 that appears on the mobile communications device's 10 visual display 12.

The support person can now use this image 12' to assist the person seeking support. This ability to view the same image 12' will make such assistance much more efficient and facilitate a solution of the issue that triggered the call to the call center. In a particularly useful embodiment of the invention, the support person can use the call center communications device 200 to actually control the functions of the mobile communications device 10.

As those skilled in the pertinent art will readily understand, the inventions described herein are implemented by various software applications. In one embodiment of the invention the applications described herein are embodied in a digital storage medium that has electronically readable control instructions for controlling a mobile communications device 10. These control instructions include (1) connection instructions for establishing voice and data connectivity between a mobile communication device and a call center communications device; and (2) transmission instructions for transmitting the entirety of an image appearing on a visual display on the mobile communications device and replicated the image on a visual display on the call center communications device. A further aspect of this embodiment provides for the digital storage medium to have the electronically readable control instructions embodied in implementation software. In one embodiment the digital storage medium is a microchip.

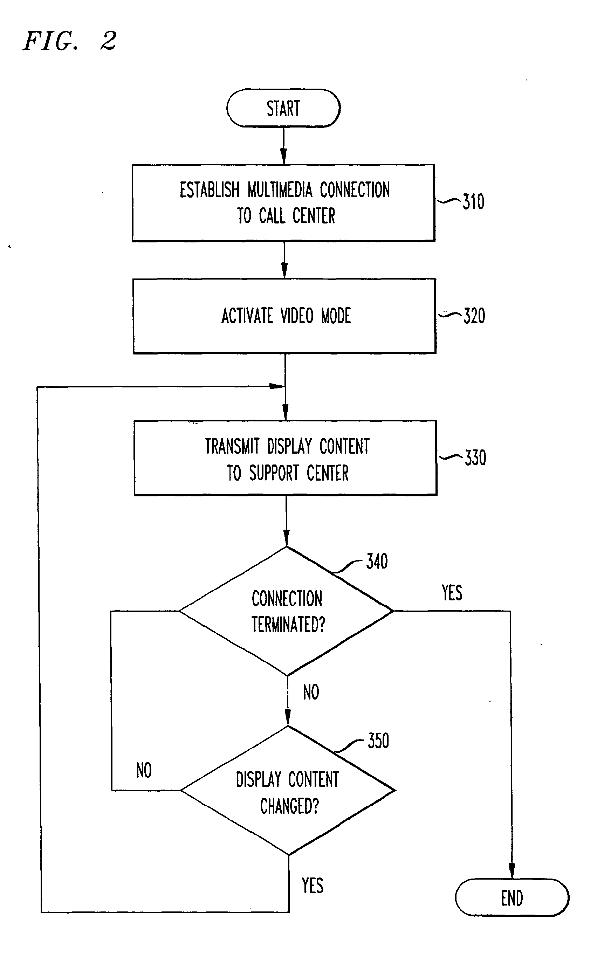

FIGURE 2 illustrates a flow chart of communications between a mobile communications device and a call center communications device that are conducted in accordance with the present invention. The user of the mobile communications device establishes a multimedia connection 310 (voice and data) with the call center communications device. This enables video streaming from the mobile phone to the call center mobile communications device parallel to the voice communication. When the multimedia connection 310 is established, the user uses a connectivity module on the mobile phone to activates a video mode 320, the activation of which causes the entirety of the image appearing on the visual display on the mobile phone to be digitally transmitted to the support center communications device 330, where it will be replicated on its visual display. In one embodiment, the transmission function can be activated to provided for the image to be transferred to the call center communications device immediately after a connection is established without further action by the user.

As long as the connection is not terminated 340, the image on the mobile communications device can be repeatedly checked by the call center communications device to see if the image has changed 350, as would occur if a user scrolled through a functional menu. If the image has changed 350, the changed image is digitally transmitted to the support center 330 communications device and replicated on its visual display. Although not shown in FIGURE 2, the data connection can be terminated at any time during an established connection.

Although the present invention has been described in detail, those skilled in the art should understand that they can make various changes, substitutions and alterations herein without departing from the spirit and scope of the invention in its broadest form.

## Claims

1. A method for providing call center support to a mobile communications device, comprising:
establishing voice and data connectivity between a mobile communications device having a visual display and a call center communications device having a visual display; and
causing an entirety of an image appearing on the visual display of said mobile communications device to be replicated on the visual display of said call center communications device.

2. The method as recited in Claim 1 wherein said image is a video stream.

3. The method as recited in Claim 1 wherein said call center controls said mobile communications device.

4. The method as recited in Claim 1 wherein changes to an image appearing on the visual display of said mobile communications device are replicated on the visual display on said call center communications device.

5. The method as recited in Claim 1 wherein data connectivity is established by said mobile communications device user input.

6. A mobile communications device, comprising:
an input for establishing voice and data connectivity with a call center communications device; and
a connectivity module for replicating the entirety of an image appearing on a visual display on said mobile communications device on a visual display on said call center communications device.

7. The mobile communications device as recited in Claim 6 wherein said image is a video stream.

8. The mobile communications device as recited in Claim 6 wherein any change or modification of the image appearing on the display on said mobile communications device is replicated on the display on said call center communications device.

9. The mobile communications device as recited in Claim 6 wherein said connectivity module is responsive to user input.

10. The mobile communications device as recited in Claim 6 wherein said call center communications device controls said mobile communications device.
